# FASCICULE DE BREVET EUROPEEN

(11) **EP 2 820 875 B1**
(45) Date de publication et mention de la délivrance du brevet: **04.05.2016**
(21) Numéro de dépôt: 13711085.4
(22) Date de dépôt: 28.02.2013
(51) Int. Cl.: H04W 12/06, H04L 29/06, H04W 4/12, G06Q 30/02

(54) **PROCEDE ET DISPOSITIF DE RECONNAISSANCE D'UN TERMINAL MOBILE COMMUNICANT**
VERFAHREN UND VORRICHTUNG ZUR ERKENNUNG EINES KOMMUNIZIERENDEN MOBILEN ENDGERÄTS
METHOD AND DEVICE FOR RECOGNIZING A COMMUNICATING MOBILE TERMINAL

(30) Priorité: 29.02.2012 FR 1251850; 10.05.2012 FR 1254285
(43) Date de publication de la demande: 07.01.2015
(73) Titulaire: Mobi Rider, F-31670 Labege (FR)
(72) Inventeur: PHAN, Nghia, F-31590 Verfeil (FR)
(74) Mandataire: Ipside
(86) Numéro de dépôt international: PCT/FR2013/050432
(87) Numéro de publication internationale: WO 2013/128139

(56) Documents cités:
- EP-A1- 1 995 985
- WO-A1-2006/122364
- WO-A1-2007/010223
- GB-A- 2 472 832
- US-A1- 2008 220 777
- US-A1- 2010 273 504
- US-B2- 7 706 784

## Description

### DOMAINE TECHNIQUE DE L'INVENTION

La présente invention concerne un procédé et un dispositif de reconnaissance d'un terminal mobile communiquant. Elle s'applique, en particulier, à l'identification d'un terminal pour délivrer une information personnalisée à un utilisateur de ce terminal.

### ETAT DE LA TECHNIQUE

L'identification, processus qui consiste à communiquer ou reconnaître une identité, doit être rapide, universelle mais aussi respectueuse de la vie privée de l'individu. Cette identification peut être utilisée notamment pour permettre ou interdire l'accès à un service ou d'un produit.

Par exemple, sur un lieu de vente, l'identification d'un client permet au marchand de différencier et de valoriser chaque client de façon personnalisée.

Depuis quelques années, des technologies dites « sans contact » de type RFID (acronyme de RadioFrequence IDentification pour identification radiofréquence) ou NFC (acronyme de Near Field Communication pour communication à champ proche) permettent une identification rapide. Cependant ces technologies requièrent le déploiement, à la fois, de nouveaux lecteurs sur les lieux souhaitant l'identification et de nouvelles cartes plastiques équipées de « tag » (étiquette) RFID passif, venant alourdir encore un peu plus les poches ou les portefeuilles des usagers, ou encore le déploiement en masse de nouveaux terminaux mobiles NFC coûteux et encore peu nombreux.

Du fait de la connexion nécessaire au serveur de l'opérateur, l'identification est complexe, lente, onéreuse et limitée aux zones géographiques où le signal émis par l'opérateur est disponible.

Certaines solutions alternatives au RFID et NFC ont été l'objet de dépôt de demande de brevets. Un brevet a été délivré aux Etats-Unis à Avish Jacob Weiner et Dror Fixler sous le numéro US 7,706,784 en date du 27 Avril 2010. Dans ce brevet, il est proposé d'utiliser un protocole de téléphonie cellulaire afin d'obtenir un identifiant temporairement assigné à un mobile dans une zone déterminée par l'opérateur de téléphonie mobile à ce mobile. Cet identifiant étant temporairement défini par l'opérateur de téléphonie mobile du mobile en question, il est proposé d'établir une communication entre le système et les serveurs de l'opérateur de téléphonie mobile en question afin d'obtenir une identification sécurisée et unique du mobile auquel l'opérateur a assigné cet identifiant temporaire, pour des raisons de sécurité. Le brevet fait notamment référence à l'utilisation, à des fins d'identification, d'informations confidentielles et personnelles telles que le numéro IMSI, conservé par la carte SIM (acronyme de « subscriber Identification Module » pour module d'identification de souscripteur) personnelle du porteur du téléphone mobile.

Du fait de la nécessité d'établir une communication suffisante pour recevoir les informations confidentielles puis d'interroger un serveur, ce type de dispositif d'identification est très lent. Il n'est donc pas adapté à une identification rapide, par exemple dans un magasin ou pour la délivrance de tickets ou l'ouverture d'une barrière ou d'une porte.

### OBJET DE L'INVENTION

La présente invention vise à remédier à tout ou partie de ces inconvénients.

A cet effet, la présente invention vise un dispositif d'identification d'un terminal mobile communiquant, qui comporte :
- un moyen de couplage électromagnétique définissant une zone de couplage électromagnétique exclusive entre le dispositif et le terminal mobile communicant,
- un moyen d'interfaçage radio à bande ultralarge simulant la disponibilité pour communiquer avec le terminal mobile d'au moins une station de base d'un réseau de télécommunication et
- un moyen de reconnaissance d'une signature numérique unique du terminal mobile communicant mettant en oeuvre des échantillons d'une trace électromagnétique d'un message envoyé par le terminal mobile pour tenter de se connecter à une station de base simulée.

Grâce à ces dispositions, sans qu'une connexion ne soit établie entre une station de base et le terminal mobile communicant, on provoque de la part du terminal mobile communiquant l'émission d'un message représentatif d'au moins un de ses identifiants et on en capte des échantillons d'une trace électromagnétique du message émis, sans décoder ce message. Ces échantillons permettent de constituer une signature unique du terminal mobile communicant, sans connaître aucun de ses identifiants.

Dans des modes de réalisation, le moyen d'interfaçage simule la disponibilité d'une station de base d'un réseau de télécommunication cellulaire.

Dans des modes de réalisation, le dispositif comporte, en outre, un moyen de transmission de minimessages audit terminal mobile communicant sans utilisation du numéro de téléphone du terminal mobile communicant.

Grâce à ces dispositions, le dispositif permet la mémorisation d'information dans le terminal et/ou le lancement d'une application téléchargée dans ce terminal.

Dans des modes de réalisation, la plus grande dimension de la zone de couplage électromagnétique exclusive est inférieure à la moitié de la longueur d'onde des signaux électromagnétiques mis en oeuvre par le moyen d'interfaçage radio.

Grâce à ces dispositions, les ondes ne se forment pas à l'intérieur de la zone de couplage.

Dans des modes de réalisation, le dispositif comporte, en outre :
- un moyen de réception d'un signal d'horloge de référence d'un réseau de téléphonie cellulaire et
- un moyen d'émission d'un signal électromagnétique à l'intérieur de la zone de couplage électromagnétique exclusive, ledit signal étant synchronisé avec ladite horloge de référence reçue.

Grâce à ces dispositions, le terminal n'a pas à se re-synchroniser et peut donc envoyer son message en vue de se connecter à la station de base simulée plus rapidement.

Dans des modes de réalisation, le moyen de réception d'une horloge de référence comporte une antenne extérieure à la zone de couplage électromagnétique, ladite antenne recevant un signal d'horloge d'une station de base du réseau de téléphonie cellulaire.

Dans des modes de réalisation, le moyen d'interfaçage est configuré pour émettre simultanément des signaux ayant des porteuses simulant une pluralité de stations de base.

Dans des modes de réalisation, le dispositif comporte, en outre :
- un moyen d'allocation d'un canal de communication au terminal mobile,
- un moyen de réception, sur le canal alloué, d'un message représentatif d'une demande de mise à jour de positionnement (« location update ») du terminal mobile, ladite demande étant représentative d'au moins un identifiant du terminal mobile et
- un moyen de prélèvement d'échantillons du signal de demande de mise à jour de positionnement, pour définir une signature du terminal mobile.

Grâce à ces dispositions, le message utilisé pour générer la signature est un message envoyé rapidement par le terminal mobile communicant.

Dans des modes de réalisation, le moyen d'allocation d'un canal de communication est configuré pour accepter une demande de canal de communication en provenance du terminal mobile.

Grâce à ces dispositions, l'accord sur le canal de communication est très rapidement obtenu par le terminal mobile.

Dans des modes de réalisation, ledit canal de communication est un canal de communication point à point.

Grâce à ces dispositions, bien que le dispositif n'ait pas décodé de message reçu de la part du terminal mobile communicant, il met en place avec ce terminal, une communication bidirectionnelle.

Dans des modes de réalisation, le dispositif comporte un moyen d'émission d'un message sur ledit canal de communication, pour provoquer la mémorisation d'une information dans le terminal mobile.

Dans des modes de réalisation, ladite information mémorisée dans le terminal mobile dépend de l'identifiant du terminal mobile.

Ainsi, une information personnalisée, par exemple une promotion, est envoyée à l'utilisateur du terminal mobile communicant.

Dans des modes de réalisation, dans le message émis par le moyen d'émission d'un message sur ledit canal comporte une instruction de lancement d'une application chargée sur le terminal mobile.

L'utilisateur peut ainsi, en récupérant le terminal mobile, visualiser immédiatement une information personnalisée ou une interface d'application lui permettant d'y accéder immédiatement.

Dans des modes de réalisation, le moyen d'émission d'un message sur ledit canal de communication est configuré pour que ledit message prenne la forme d'un message court (« SMS »).

Dans des modes de réalisation, le moyen de prélèvement d'échantillons est configuré pour prélever des échantillons représentatifs de la demande de mise à jour de positionnement, à des instants prédéterminés auquel ladite demande de mise à jour de positionnement représente un identifiant du terminal mobile.

Dans des modes de réalisation, le dispositif comporte :
- un moyen d'allocation d'un canal de communication au terminal mobile et
- un moyen d'émission d'un message sur ledit canal sans décodage de message de mise à jour de positionnement émis par le terminal mobile.

Grâce à chacune de ces dispositions, le terminal obtient une information personnalisée, sans que le dispositif n'ait connaissance d'un identifiant de ce terminal.

Selon un deuxième aspect, la présente invention vise un procédé d'identification de terminal mobile communicant, qui comporte :
- une étape de couplage électromagnétique dans une zone de couplage électromagnétique exclusive entre le dispositif et le terminal mobile communicant,
- une étape d'interfaçage radio à bande ultralarge simulant la disponibilité pour communiquer avec le terminal mobile d'au moins une station de base d'un réseau de télécommunication et
- une étape de reconnaissance d'une signature numérique unique du terminal mobile communicant mettant en oeuvre des échantillons d'une trace électromagnétique d'un message envoyé par le terminal mobile pour tenter de se connecter à une station de base simulée.

Les avantages, buts et caractéristiques particulières de ce procédé étant similaires à ceux du dispositif objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du dispositif de capture d'une grandeur physique, en regard des dessins annexés, dans lesquels :
- la figure 1 représente, schématiquement et en section, un mode de réalisation particulier du dispositif de reconnaissance d'un terminal mobile communiquant objet de la présente invention, en position fermée,
- la figure 2 représente, schématiquement et en section, le dispositif illustré en figure 1, en position ouverte,
- la figure 3 représente, schématiquement et en vue de dessus, des composants électroniques sur une carte électronique incorporée au dispositif illustré en figures 1 et 2.
- la figure 4 représente un ensemble de fréquences mises en oeuvre par le dispositif illustré en figures 1 à 3,
- la figure 5 représente, sous forme d'un logigramme, des étapes d'un mode de réalisation particulier du procédé objet de la présente invention,
- les figures 6 à 11 représentent, schématiquement, différents modes de réalisation particuliers de la partie mécanique d'un dispositif objet de l'invention,
- les figures 12 à 14 représentent, schématiquement, différents schéma-blocs de modes de réalisation particuliers du dispositif objet de l'invention,
- les figures 15A et 15B représentent, sous forme d'un logigramme, des étapes mises en oeuvre dans un mode de réalisation particulier du procédé objet de l'invention et
- les figures 16 à 18 représentent, schématiquement en en vue de côté, trois modes de réalisation particuliers du dispositif objet de la présente invention.

### DESCRIPTION D'EXEMPLES DE REALISATION DE L'INVENTION

On note que les figures ne sont pas à l'échelle.

Dans les modes de réalisation décrits ci-dessous, le dispositif objet de la présente invention est particulièrement adapté à une reconnaissance rapide d'un téléphone mobile, avec un dispositif peu encombrant, par exemple pour délivrer des informations personnalisées à l'utilisateur de ce téléphone. Par exemple, ce mode de réalisation permet la mise en oeuvre d'une carte de fidélité virtuelle, l'information fournie à l'utilisateur représentant des offres ou des rabais.

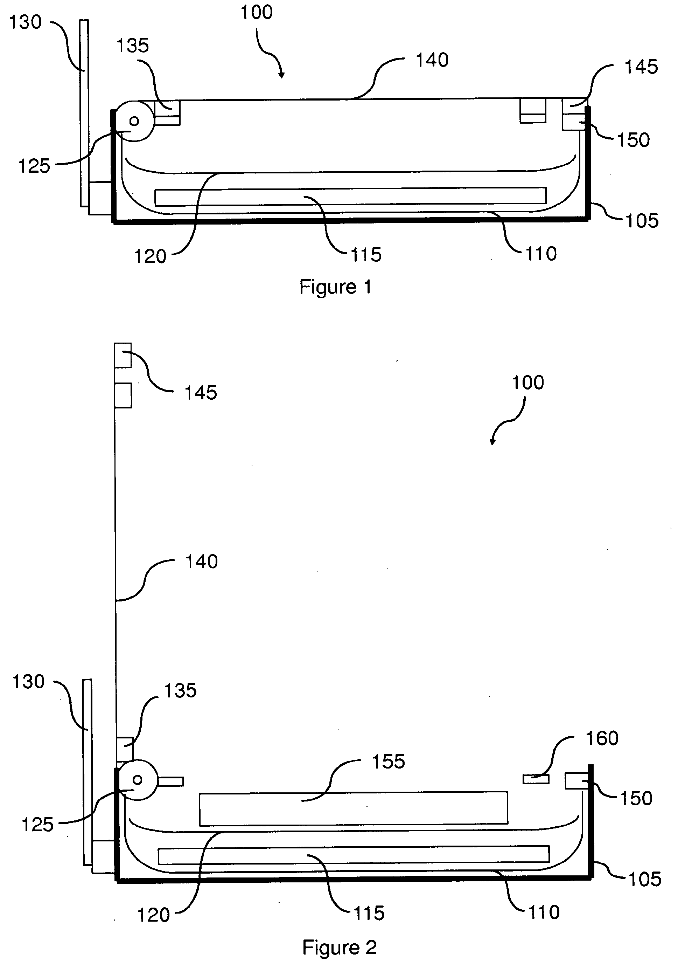

On observe, en figures 1 et 2, un dispositif 100 de reconnaissance de terminaux mobiles communicants, tels que le téléphone mobile 155 (figure 2). Ce dispositif 100 comporte :
- un boîtier rigide 105,
- une coque électriquement conductrice inférieure 110, à l'intérieur du boîtier 105,
- un circuit électronique 115, au dessus de la coque 110,
- un cache 120 supérieur, non conducteur de l'électricité, par exemple en matière plastique, au dessus du circuit électronique 115,
- une antenne extérieure 130,
- un arbre de rotation 125 relié au boîtier 105, d'une part, et à un volet 140, d'autre part,
- le volet 140, conducteur de l'électricité et préférentiellement au moins partiellement transparent, portant un joint conducteur périphérique 135 et une pièce métallique ferromagnétique 145,
- en regard du joint conducteur périphérique 135, un rebord conducteur 160 solidaire du boîtier 105 et
- en regard de la pièce métallique ferromagnétique 145, un électro-aimant 150 formant serrure pour maintenir fermé ou relâcher le volet 140.

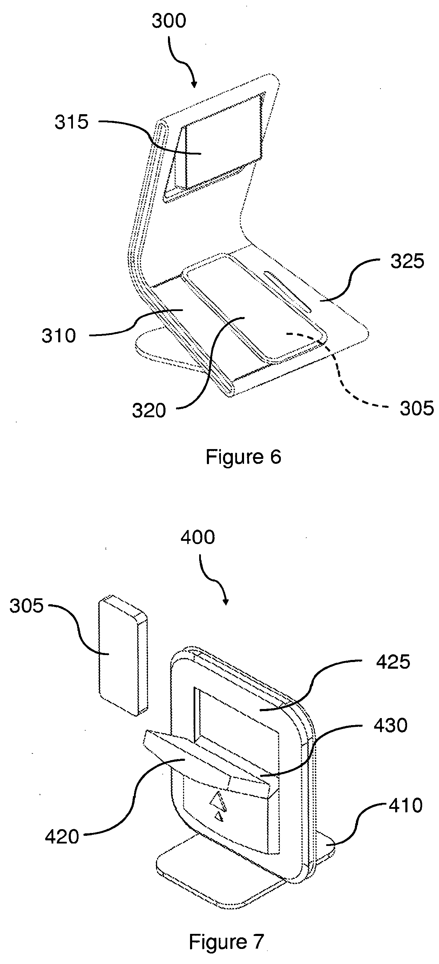

Le boîtier rigide 105 est constitué de n'importe quelle matière et prend une forme quelconque, par exemple l'une des formes illustrées en figures 6 à 11. La coque conductrice inférieure 110 forme avec le volet conducteur 140, le joint conducteur 135 et le rebord conducteur 160 une cage de Faraday. Comme exposé plus loin, l'antenne 130 permet, malgré cette cage de Faraday, de maintenir la synchronisation du téléphone mobile 155 avec une antenne de station de base d'un réseau de téléphonie cellulaire.

Le rebord conducteur 160 est, par exemple, un joint métallique en appui sur de la mousse ou du tissu.

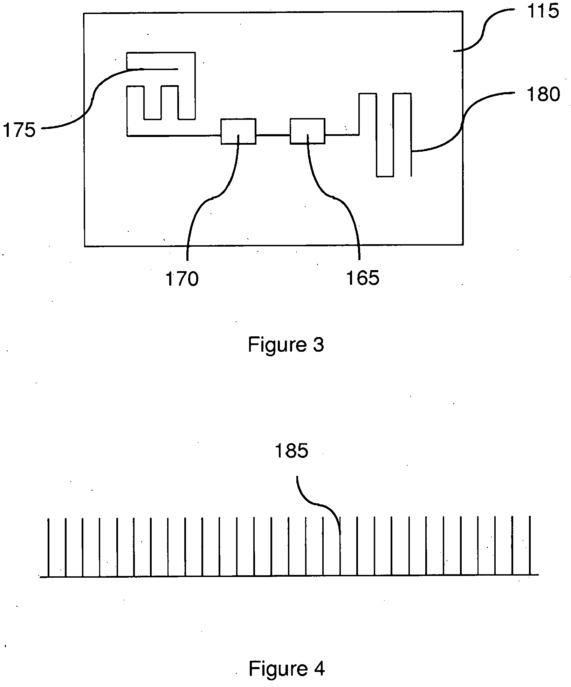

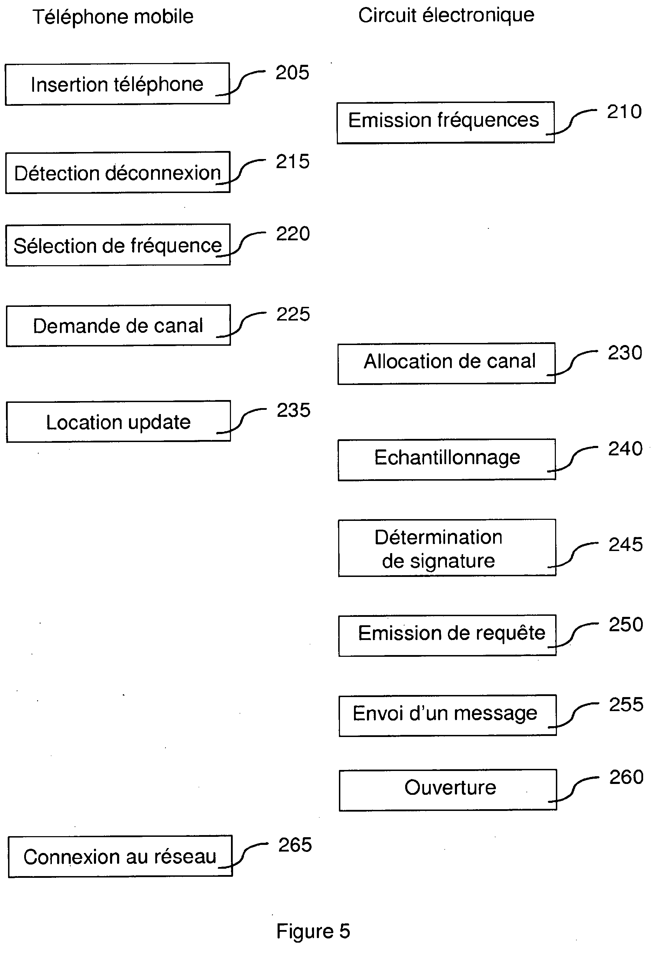

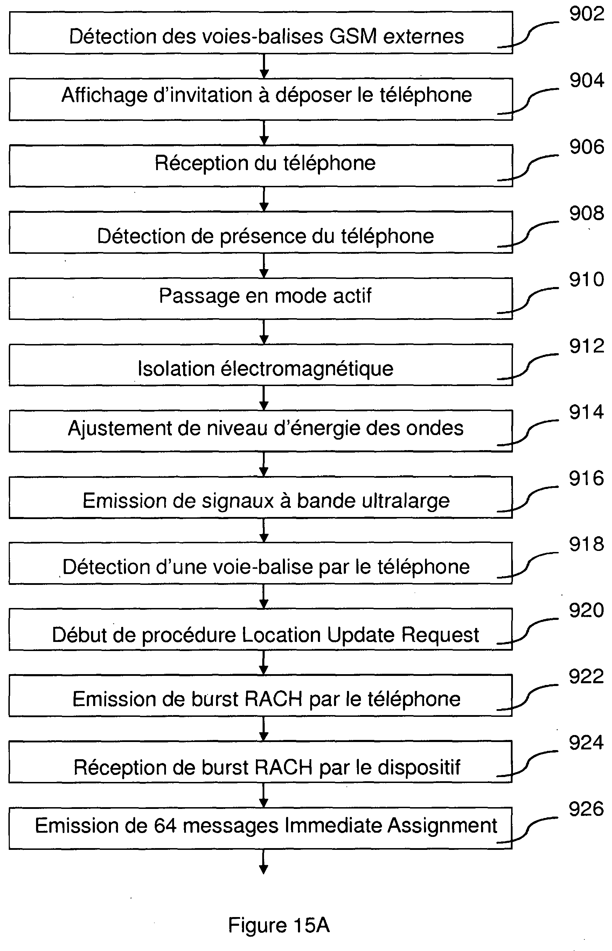

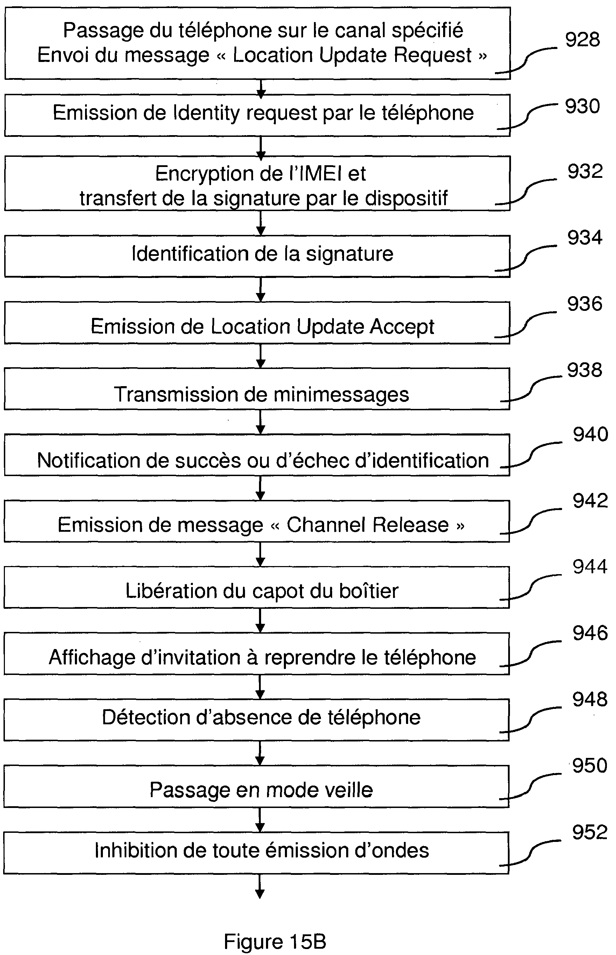

Le circuit électronique 115 est illustré en regard des figures 5 et 15, en ce qui concerne ses fonctions et en regard des figures 3, 4 et 12 à 14, en ce qui concerne ses composants.

Le cache 120 supérieur a pour fonction de masquer au regard de l'utilisateur le circuit électronique 115 et de supporter le téléphone mobile 155.

L'antenne extérieure 130 fournit une base de temps pour la synchronisation du circuit 115 et du téléphone mobile 155.

L'arbre de rotation 125 comporte, préférentiellement, un ressort de rappel pour ouvrir le volet 140 lorsque l'électro-aimant 150 n'est pas alimenté.

Le volet 140 est, par exemple, constitué d'une plaque de verre, au dessus, d'une feuille de métal périphérique intercalaire et d'un film conducteur sur l'ensemble de la surface, collé à la plaque de verre, en dessous. Ce film est, par exemple, métallisé en nanotechnologies. Le joint conducteur périphérique 135 est collé sur la feuille de métal périphérique.

Préférentiellement, un interrupteur à accès externe (non représenté) permet de couper l'alimentation de l'électro-aimant 150, pour ouvrir le volet 140 en cas de panne du dispositif maintenant alimenté cet électro-aimant 150.

A l'intérieur du boîtier est effectué un couplage électromagnétique entre un composant émetteur-récepteur 180 (figure 3) et l'antenne du téléphone mobile 155. On note que la plus grande dimension interne de la coque conductrice 110 est préférentiellement entre un quart et la moitié de la longueur d'onde utilisée par le téléphone mobile 155. Ainsi, ce n'est qu'un champ électromagnétique de couplage qui se forme entre le composant émetteur-récepteur 180 et l'antenne du téléphone mobile 155, puisque aucune onde ne peut se former dans l'espace intérieur de la cage de Faraday. Ainsi, le couplage électromagnétique est similaire à celui qui existe entre deux bobines, ou inductances. Pour que le couplage soit efficace, le composant 180 est configuré pour effectuer un couplage selon la polarisation horizontale.

La dimension de la cage de Faraday est liée au peigne de fréquences émises (voir plus loin).

On observe que, préférentiellement, le composant émetteur-récepteur 180 n'émet des ondes électromagnétiques que lorsque le volet 140 est fermé. Ceci assure l'absence d'émissions électromagnétiques qui pourrait perturber d'autres téléphones mobiles à l'extérieur du boîtier 105.

L'antenne 130 permet de contrôler la discontinuité du champ électromagnétique entourant le téléphone mobile 155 lors de la fermeture de la cage de Faraday, c'est-à-dire du volet 140 afin d'éviter de perdre la synchronisation du téléphone mobile avec le réseau de téléphonie mobile, tout en provoquant, de sa part, une tentative d'identification sur un réseau de téléphonie mobile.

Plutôt que d'éliminer le champ électromagnétique, on se limite à en modifier les caractéristiques pour entrer en interaction avec le téléphone mobile 155 plus rapidement.

Ainsi, préférentiellement, on évite la perte de synchronisation du téléphone mobile 155 mais on simule un changement de cellule d'un réseau de téléphonie cellulaire, comme si la nouvelle cellule avait le même signal de synchronisation que la cellule qui est quittée.

Ainsi, à l'intérieur de la cage de Faraday, on utilise la référence d'horloge fournie par la station de base extérieure au dispositif 100. On obtient ainsi une horloge stable à moindre frais, un simple quartz synchronisé avec le signal d'horloge de cette station de base, capté par l'antenne 130, suffisant à la génération de cette horloge à l'intérieur de la cage de Faraday. On note que le signal d'horloge externe n'est préférentiellement pas utilisé lorsqu'un champ électromagnétique est émis à l'intérieur de la cage de Faraday par le circuit 115. Selon le décalage (« drift »), on re-synchronise, à différents moments, le quartz sur la station de base externe.

On note que ce maintien de la synchronisation est favorable tant à la reconnaissance du téléphone mobile qu'au rétablissement de la cellule initiale lorsqu'on ouvre le volet 140 et que le téléphone mobile 155 doit reprendre sa communication avec le réseau de téléphonie cellulaire externe au dispositif 100.

Ainsi, à l'intérieur de la cage de Faraday, on émet les signaux d'autres cellules tout en dupliquant partiellement, c'est-à-dire au niveau de la synchronisation, l'environnement électromagnétique présent à l'extérieur du dispositif 100.

Ainsi, du point de vue du téléphone mobile 155, on change de code de région (« area code ») comme si le téléphone mobile 155 avait changé de région ou de pays. La fréquence et la synchronisation (phase) restant inchangées, seul un paramètre logiciel est modifié.

Pour augmenter la rapidité de reconnaissance du téléphone mobile, à l'intérieur de la cage de Faraday, on utilise un ensemble (ou peigne) de fréquences 185 (voir figure 4) qui couvre un large intervalle de fréquences. On simule ainsi une multitude, voire la totalité, de stations de bases de cellules d'un réseau de téléphonie cellulaire. Ce qui permet au téléphone mobile 155 de trouver immédiatement une station de base avec laquelle communiquer sans tester successivement différentes fréquences de stations de base.

Le téléphone mobile 155 envoie ainsi une demande de mise à jour de positionnement dont des échantillons, représentatifs d'au moins un de ses identifiants, sert de signature pour la reconnaissance du téléphone mobile 155.

On note que, en procédant ainsi, le dispositif 100 n'effectue aucune connexion avec le réseau de l'opérateur auquel est rattaché le téléphone mobile 155 et n'a besoin d'aucune analyse de l'environnement extérieur au boîtier 105.

Préférentiellement, le peigne de fréquences, qui représente une bande ultra-large (« UWB » pour ultra-wide band) comporte plusieurs centaines de fréquences de stations de base, par exemple cinq cents. L'énergie émise est étalée, ce qui évite la saturation et la recherche d'une fréquence de station de base au-delà de la première fréquence testée par le téléphone mobile 155. Le téléphone mobile 155 est ainsi immédiatement callé en fréquence et en phase avec la station de base simulée.

Tout se passe, du point de vue du téléphone mobile 155, comme s'il quittait une cellule (celle à laquelle le téléphone mobile 155 était relié à l'extérieur du boîtier 105) et en retrouvait une autre ayant la même synchronisation (phase) et la même fréquence.

Ainsi, le dispositif 100 utilise la couche physique du réseau de téléphonie mobile mais aucunement les couches de protocole supérieures, notamment celles mettant en oeuvre un décodage.

Sur la couche physique, la signature est constituée d'échantillons représentatifs d'au moins un identifiant du téléphone mobile 155, par exemple son IMEI. On note que la signature peut être issu d'échantillons de la trace électromagnétique de différents messages, selon le protocole de communication utilisé par le terminal mobile 155, pourvu que le message considéré représente un identifiant du terminal ou d'une carte additionnelle d'identification de l'utilisateur, par exemple une carte SIM.

En revanche, pour communiquer depuis le dispositif 100 vers le téléphone mobile 155, on peut envoyer un message court (SMS pour short message system) ou un USSD (« Unstructured Supplementary Service Data », qui peut se traduire en « Service supplémentaire pour données non structurées »).

Ainsi, bien que l'on ne décode aucun message ascendant (du téléphone mobile 155 vers la station de base simulée), on peut encoder un message descendant car on sait à quel moment émettre ce message codé.

La signature numérique du téléphone mobile 155 est constituée d'échantillons de la phase d'enrollement (« enrollment ») représentant au moins un identifiant. Préférentiellement, on forme un condensât (« hash », par exemple SHA1 ou SHA2) à partir de ces échantillons pour donner une signature conservée sur un serveur de signatures associées à des téléphones mobiles d'utilisateurs référencés (par exemple porteurs d'une carte de fidélité ou d'un droit d'accès).

On note que les échantillons du signal d'enrollement qui servent à constituer la signature du téléphone mobile 155 comportent des échantillons représentatifs de l'IMEI ou de l'IMSI, ces deux identifiants étant représentés successivement dans le signal d'enrollement émis par le téléphone mobile 155, dans la norme GSM. Les autres normes de téléphonie mobile présentent des signaux similaires représentatifs, eux aussi, d'au moins un identifiant unique de l'identifiant de la carte SIM du téléphone mobile.

Le dispositif 100 est préférentiellement relié au réseau internet, par exemple à travers un boîtier décodeur (connu sous le nom de « box ») ou le réseau de téléphonie mobile, directement, ou par l'intermédiaire d'une tablette ou d'une caisse externe. Dans des modes de réalisation, la base de données est conservée localement. C'est, par exemple, le cas lorsque le dispositif 100 objet de la présente invention sert à donner un accès, par exemple par ouverture d'une porte ou d'une barrière, par exemple dans un établissement hôtelier.

On note que, du point de vue d'une caisse de magasin, la signature peut être vue comme une site de caractères, comme ceux fournis par un lecteur de codes à barres. Si la connexion entre le dispositif 100 est un connecteur USB, ce dispositif est vu comme un simple périphérique auquel est associé une petite librairie de programmes.

Préférentiellement, par la communication descendante, le dispositif 100 lance une application sur le téléphone mobile 155, notamment lorsque ce téléphone mobile 155 est un smartphone. Par exemple, lorsque le dispositif 100 permet la mise en oeuvre de cartes de fidélités virtuelles, l'application lancée est une application représentant les différents aspects de la carte de fidélité.

Dans le cas de la création de la carte de fidélité, la même procédure est mise en oeuvre pour créer une signature numérique unique du téléphone mobile 155 et lui associer des données représentatives de son porteur (nom, numéro de téléphone mobile et adresse, par exemple). Parallèlement, par la communication descendante, le dispositif 100 fournit au téléphone mobile 155 un lien pour le téléchargement de l'application qui sera lancée lors de reconnaissances du téléphone mobile 155 et de la librairie de programmes.

Le dispositif objet de la présente invention permet, par exemple, l'affichage d'offres personnalisées lors de l'entrée dans un magasin ou le paiement électronique (« e-payment »), en sortie.

On observe que la même application peut gérer plusieurs cartes de fidélité virtuelles constituant un portefeuille de cartes de fidélités.

En ce qui concerne les dimensions des antennes 175 et 180 représentées en figure 3 et séparées par deux résistances 165 et 170, l'ensemble des caractéristiques physiques de la piste (largeur, longueur, épaisseur, dessin) est adapté à générer un champ en polarisation plutôt horizontal, et ce, sur une bande très large de quelques centaines de MHz à quelques GHz).

On observe, en figure 5, des étapes successives de fonctionnement de la carte électronique 115 et du téléphone mobile 155.

Au cours d'une étape 205, on insère le téléphone mobile 155 dans le dispositif 100 et on ferme le volet 140, isolant ainsi le téléphone mobile 155 de la station de base réelle à laquelle le téléphone mobile 115 est associé. La fermeture de la serrure électronique 145 et 150 est détectée par le circuit électronique 115.

Au cours d'une étape 210, le circuit électronique 115 émet un ensemble de fréquences étalées représentant des signaux émis par des dizaines, voire des centaines, de stations de base d'un réseau de téléphonie mobile accolées les unes aux autres. Préférentiellement, le circuit électronique émet toutes les fréquences de stations de base des différents opérateurs.

Au cours d'une étape 215, le téléphone mobile 155 détecte qu'il a perdu son association avec la station de base à laquelle il était associé en dehors du dispositif 100.

Au cours d'une étape 220, le téléphone mobile 155 recherche la présence d'une première fréquence (voie balise) de station de base avec laquelle il pourrait s'associer, par exemple la fréquence utilisée par la station de base externe à laquelle le téléphone mobile était initialement associé. Puisque le circuit électronique 115 émet cette fréquence, le téléphone mobile 155 la sélectionne. Dans le cas où le circuit électronique n'émet pas toutes les fréquences utilisables, du fait qu'il en émet un grand nombre, l'obtention, par le téléphone mobile 155 d'une fréquence de station de base virtuelle à laquelle s'associer est, de tout façon, rapide.

Au cours d'une étape 225, le téléphone mobile 155 envoie une demande de canal (par exemple le canal « 1 ») à la station de base en utilisant la fréquence (voie balise) sélectionnée, en proposant un canal particulier.

Au cours d'une étape 230, le circuit électronique 115 émet un signal d'accord à la demande de canal. Il s'instaure alors une communication point à point entre le téléphone mobile 155 et le circuit électronique 115. Ainsi, le circuit électronique 115 alloue au téléphone mobile 155 un canal sur lequel il peut échanger des messages avec le circuit électronique 115.

Au cours d'une étape 235, le téléphone mobile 155 émet un message de positionnement dans la nouvelle cellule simulée (« location update »).

Au cours d'une étape 240, le circuit électronique 115 reçoit le message de positionnement, détermine l'instant de début des paquets ayant une charge utile et prend des échantillons aux instants où le message représente l'IMEI puis d'autres échantillons aux instants où le message représente l'IMSI. On note que chaque échantillon donne une valeur numérique représentative de l'amplitude du signal « local update », sans décodage de ce signal. En particulier, ni l'IMEI, ni l'IMSI ne sont décodés. Seules leurs traces dans l'intensité du champ électromagnétique émis par le téléphone mobile 155 servent à constituer la valeur des échantillons.

Au cours d'une étape 245, un condensât (« hash ») est obtenu à partir de la valeur des échantillons. Par exemple l'un des algorithmes SHA1 ou SHA2 est utilisé pour fournir ce condensât, qui sert de signature numérique du téléphone mobile 155.

Au cours d'une étape 250, le condensât est introduit dans une requête adressée à une base de données conservant des signatures de téléphones mobiles. Selon les cas, soit la signature est recherchée à l'identique, soit une fonction de distance est utilisée pour déterminer la signature la plus proche dans la base de données (pour tenir compte du bruit qui peut affecter le prélèvement d'échantillons.

En retour, la base de données fournit une indication de la reconnaissance de la signature et, si la signature est reconnue, des informations destinées au porteur du téléphone mobile 155. Dans le cas où il s'agit de donner un droit d'accès au porteur du téléphone mobile 155, le retour se fait à destination d'un actionneur de la barrière ou de la porte. Dans le cas du e-paiement, le retour se fait après prélèvement sur le compte du porteur du téléphone mobile 155.

En se limitant au cas d'informations destinées au porteur du téléphone mobile 155, au cours d'une étape 255, le circuit électronique 115 envoie un message, en utilisant le canal partagée, en point à point, pour lancer une application sur le téléphone mobile 155. Comme exposé plus haut, ce message peut prendre la forme d'un message court. On note que, sur ce canal point à point, le numéro de téléphone du téléphone mobile 155 est inutile. Le transmetteur du circuit électronique 115 est modulé en fréquence (par exemple de type FSK pour frequency shift keying).

Au cours d'une étape 260, le circuit électronique 115 arrête l'émission d'un champ électromagnétique et provoque l'ouverture de la serrure 145 et 150.

On note que le circuit 115 ne répond pas au message de localisation « location update », selon le protocole de téléphonie mobile, et ne le décode pas. Aucune communication n'est ainsi mise en place sur un réseau de téléphone mobile, même virtuel.

Au cours d'une étape 265, le téléphone mobile 155 est retiré du dispositif 100 et se reconnecte à une station de base du réseau de téléphonie mobile de son opérateur, en profitant du maintien de sa synchronisation avec la station de base qu'il a quitté au cours de l'étape 210.

On développe, ci-dessous, les questions de synchronisation entre le téléphone mobile 155 et le circuit électronique 115.

Une grande stabilité d'horloge est requise afin de réussir toute synchronisation temporelle. Cette grande stabilité peut être obtenue en local grâce à des composants très spécifiques, mais très chers ou par l'asservissement d'un oscillateur local bas coût sur une référence externe réputée stable telle qu'un signal GPS, DCF 77 (77.5 KHz), Grandes Ondes France Inter (162 KHz) ou encore une station de base GSM.

Ainsi, une station de base GSM fournit une référence d'horloge avec une stabilité de 0,05 ppm. Plus précisément, la fréquence d'horloge F est garantie être comprise entre F-(0,05/10^6)*F et F+(0,05/10^6)*F.

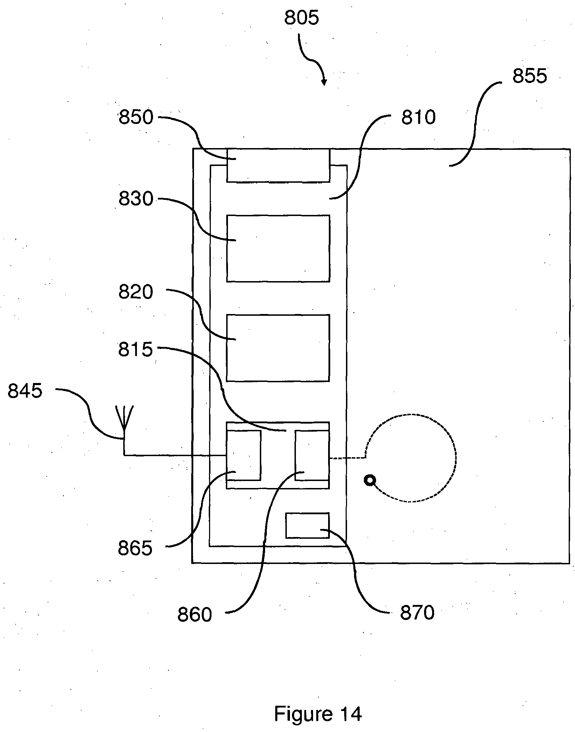

Ainsi, la carte électronique 115 comprend un sous-système incluant:
- un oscillateur à bas coût compensé en température et contrôlable en tension avec une stabilité de l'ordre de 2 ppm,
- un récepteur 865 (voir figure 14) adapté à acquérir et numériser le signal d'une station de base GSM par le biais de l'antenne 130 externe au boîtier 105,
- un module de traitement du signal adapté à calculer le décalage fréquentiel entre l'oscillateur local et la fréquence de référence (67.78833 kHz) incluse dans la porteuse du signal de la station de base GSM. Ce module est intégré dans le sous-système de contrôle 820,
- un convertisseur digital-analogique (« DAC » pour digital analog converter) adapté à commander l'oscillateur local et
- un moyen d'asservissement automatique configuré à minimiser le décalage fréquentiel mentionné ci-dessus, par itération rapide de mesures du décalage et d'ajustements de la tension de commande de l'oscillateur local.

Cet asservissement permet de disposer d'un oscillateur local, nativement spécifié à 2 ppm, avec une stabilité améliorée de l'ordre de celle de la fréquence de référence, c'est-à-dire de l'ordre de 0,05 ppm.

Le dispositif 100 est configuré à réaliser cet asservissement de façon régulière afin de garantir cette stabilité de 0,05 ppm.

Le dispositif 100 inclut un sous-système d'émission radiofréquence à bande ultralarge, 815 et 860, dans le sens défini par la directive européenne, c'est-à-dire « diffusant intentionnellement de l'énergie sur bande large d'au moins 50 Mhz ».

Ce sous-système est configuré pour diffuser à faible puissance un signal à bande ultra large dans la bande de 868 Mhz à 960 Mhz, sous le contrôle du module de contrôle 820. Le sous-système est configuré pour générer un tel signal à bande ultra large de sorte que, à travers des filtres passe bande de 400 kHz, le signal perçu ressemble à un signal à bande étroite modulé en fréquence, c'est-à-dire de même nature qu'un signal de station de base GSM.

Plus spécifiquement, le signal perçu est celui d'un émulateur de station de base GSM avec des paramètres utilisés habituellement pour des tests en usine, notamment le couplet MNC-MCC perçu est égal à 001-01 (utilisé pour le test) et le « Location Area Code » arbitrairement fixé à « 0 ».

Ainsi, le téléphone mobile 155 voit à travers une multitude de filtres passe-bande comme s'il y avait autour de lui une multitude de stations de base. Par ailleurs, ce sous-système est configuré pour diffuser un tel signal à bande ultra large de telle sorte qu'il ne présente pas de décalage, dans le domaine temporel, avec le signal de la station de base GSM, avec lequel l'asservissement d'horloge a été opéré.

Le spectre électromagnétique ainsi généré et ainsi synchronisé dans le domaine temporel équivaut à celui d'une cellule de téléphonie mobile dans laquelle il y aurait toutes les fréquences possibles de station de base. Ainsi, le téléphone mobile 155 exposé à un tel champ électromagnétique trouve nécessairement et très rapidement les fréquences qui l'intéressent.

On développe, ci-dessous, la reconnaissance du téléphone mobile 155.

Le signal électromagnétique à bande ultra-large généré comme exposé ci-dessus est adapté à forcer le téléphone mobile exposé à un tel champ à initier une procédure de "Location Update". Dans toute la description, il est entendu que le signal électromagnétique à bande ultra-large est toujours strictement limité à la zone de couplage électromagnétique exclusive (« Cage de Faraday »).

Afin de pouvoir lancer la procédure de « Location update », le téléphone mobile 155 effectue d'abord une demande de canal radiofréquence dédié sur lequel auront lieu les échanges de messages associés à la procédure de "location update".

La méthode décrite ci-dessous permet au dispositif 100 et au téléphone mobile 155 de dialoguer sur un canal radiofréquence dédié sans que le dispositif 100 ait eu connaissance de la fréquence balise sur laquelle le téléphone mobile 155 était précédemment "accrochée".

Cette demande de canal radiofréquence dédié s'effectue par l'émission d'un burst de type RACH sur une fréquence Fx, (Fx étant la fréquence balise sur laquelle le téléphone mobile était "accrochée"), a priori inconnu du dispositif 100. Le burst RACH contient la date précise de la demande ainsi qu'une référence de la demande choisie de façon aléatoire entre « 0 » et « 31 ». Ainsi à une même date, il peut avoir jusqu'à 32 demandes de canal radiofréquence dédié qui soient discernables.

Le sous-système de contrôle 820 est adapté à configurer le sous-système 860 par le biais du paramètre « MS_MAX_TX_PWR_CCH » et du seuil de détection d'énergie, de sorte que le sous-système 860 est configuré pour détecter exclusivement l'énergie transmise par le téléphone mobile 155 lors de l'émission du burst RACH et à dater précisément cette détection. Ainsi toute détection d'énergie dans la zone de couplage électromagnétique exclusive ("Cage de Faraday") équivaut à une demande de canal radiofréquence dédié.

Le sous-système de contrôle 820 est adapté à répondre favorablement et "aveuglément" à une telle demande en générant dans le signal ultra-large bande une série d'au moins 32 messages d'allocation de canal radiofréquence dédié (« Immediate Assignment »), chaque série de 32 messages étant datée avec une date proche de celle de la détection d'énergie enregistrée par le sous-système 860.

L'ensemble de ces messages « Immediate Assignment » alloue au téléphone mobile 155 un canal radiofréquence dédié unique, sur lequel le sous-système 860 est adapté à recevoir.

Cet ensemble de messages est suffisamment "étendu" (tant dans sa datation que dans les références de demande) pour que le téléphone mobile 155 trouve, dans cet ensemble, une réponse à sa demande.

Dès lors, le téléphone mobile 155 et le dispositif 100 sont configurés pour dialoguer via le canal radiofréquence dédié unique (dans le sens montant) et via le signal à bande ultra-large (dans le sens descendant).

Le sous-système de contrôle 820 est adapté à envoyer dans le signal utra-large bande un message « Identify Request » de type IMEI et le sous-système 860 est adapté à enregistrer la réponse du téléphone mobile 155 sur le canal radiofréquence dédié précédemment assigné et à en envoyer la réponse au sous-système de contrôle 820 sous forme d'un condensât de 56 caractères (SHA-224).

Dans des variantes, le volet 140 porte un écran, par exemple tactile. Le circuit 115 permet une interaction de l'utilisateur avec cet écran et avec le téléphone mobile 155. Par exemple, on représente sur un tel écran tactile ce qui est affiché sur l'écran du téléphone mobile 155.

Dans des variantes, le volet 140 est remplacé par une tablette qui fait fonctionner un programme pour interagir avec le porteur du téléphone mobile 155, par exemple en lui présentant des offres commerciales.

Dans cette variante, n'importe quel téléphone devient, par la communication avec la tablette, une tablette disposant d'une interface riche et personnalisée.

D'autres aspects de la présente invention sont donnés dans la description des figures 6 à 15 qui suit.

On observe, en figure 6, un dispositif 300 comportant un boîtier 325 monté sur un pied, constitué d'un support en matériau conducteur 310 et d'un capot coulissant en matériau conducteur 320, permettant d'isoler électromagnétiquement un terminal mobile communicant 305 de l'environnement du dispositif 300. Le dispositif 300 définit, à l'intérieur du boîtier 325, une zone de couplage électromagnétique exclusive, aussi appelé, dans la suite de la description « zone de couverture exclusive » car en sont exclus les signaux électromagnétiques présents à l'extérieur du boîtier 325. On note que le capot coulissant 320 comporte une fenêtre pour que l'utilisateur voit, en permanence, son terminal mobile 305, pendant la procédure d'identification. Le dispositif 300 comporte aussi un écran 365 qui réalise une interface utilisateur, c'est-à-dire l'affichage de données de fonctionnement et/ou de questions et, éventuellement, la saisie de données par l'utilisateur.

On observe, en figure 7, un dispositif 400, de forme généralement rectangulaire et verticale, comportant un boîtier 425 monté sur un pied 410. Le boîtier 425 est, constitué d'un support en matériau conducteur 430 et d'un capot rabattable en matériau conducteur 420, permettant d'isoler électromagnétiquement un terminal mobile communicant 305 de l'environnement du dispositif 400. Le dispositif 400 en définissant, à l'intérieur du boîtier 425, une zone de couplage électromagnétique exclusive. On note que le capot rabattage 420 comporte une fenêtre pour que l'utilisateur voit, en permanence, son terminal mobile, pendant la procédure d'identification. Dans le mode de réalisation illustré en figure 7, le terminal mobile 305 est glissé dans un espace vertical en matériau conducteur dont le capot en matériau conducteur 420 ferme la partie supérieure.

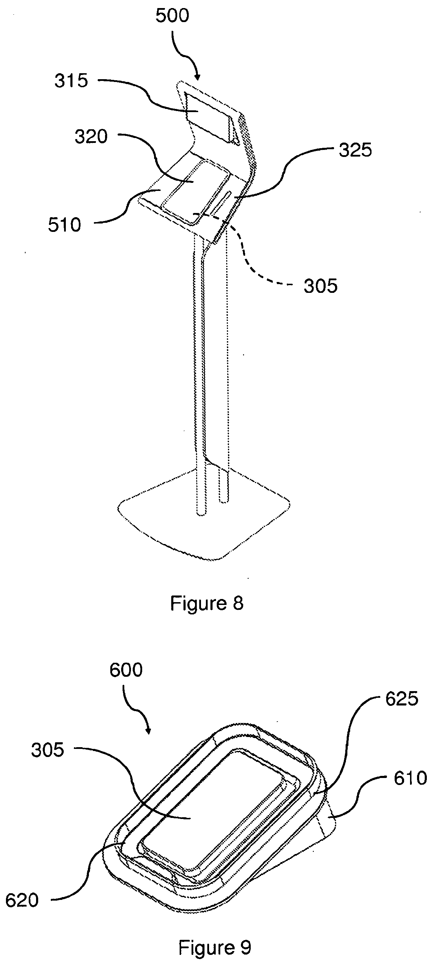

On observe, en figure 8, un dispositif 500 similaire au dispositif 300, à l'exception du pied qui est destiné à être appuyé directement sur sol et non sur un plan de travail ou un comptoir.

On observe, en figure 9, un dispositif 600 de forme généralement rectangulaire et oblique, comportant un boîtier, monté sur un pied 610 et constitué d'un support en matériau conducteur 625 et d'un capot ouvrant par l'intermédiaire d'une charnière en matériau conducteur 620, permettant d'isoler électromagnétiquement un terminal mobile communicant 305 de l'environnement du dispositif 600 en définissant, à l'intérieur du boîtier, une zone de couplage électromagnétique exclusive.

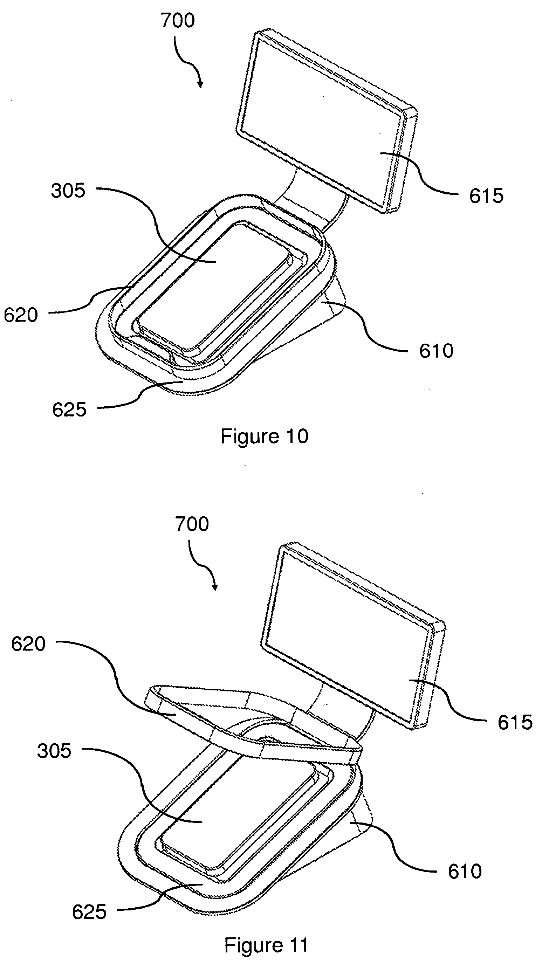

On observe, en figures 10 et 11, un dispositif 700 similaire au dispositif 600, si ce n'est qu'il comporte un écran 615 formant une interface utilisateur.

En figure 10, le dispositif 700 est fermé. En figure 11, le dispositif 700 est ouvert.

Quel qu'en soit la forme, le dispositif d'identification de terminal mobile communicant comporte, en plus du moyen de couplage électromagnétique définissant une zone de couplage électromagnétique exclusive entre le dispositif et le terminal mobile, des éléments non représentés sur les figures 6 à 11 :
- un moyen d'interfaçage radio à bande ultralarge UWB (acronyme de Ultra Wide Band pour bande ultralarge) et
- un moyen de reconnaissance d'une signature numérique unique du terminal mobile mettant en oeuvre une simulation de connexion du terminal mobile à une station de basé d'un réseau de télécommunication cellulaire.

Dans les modes de réalisation décrits ci-dessous, en regard des figures, le dispositif objet de l'invention réalise l'interface radio UWB afin de proposer une solution d'identification simple, sans contact, avec une rapidité mesurée inférieure à quelques secondes pour 99% des terminaux mobiles communicants, compatible avec tous les téléphones GSM existants, y compris les téléphones dual-mode UMTS 2G/3G, sans aucune modification matérielle ni installation de logiciel sur le téléphone, utilisant une signature numérique unique de l'équipement mobile, indépendante de la carte SIM ou des données contenues dans la SIM, respectant et préservant ainsi les données privées du porteur de l'équipement mobile.

Ce dispositif apporte donc à tous mobiles GSM/UMTS existant une interactivité similaire à celle rendue possible seulement avec un téléphone muni de moyens de communication NFC.

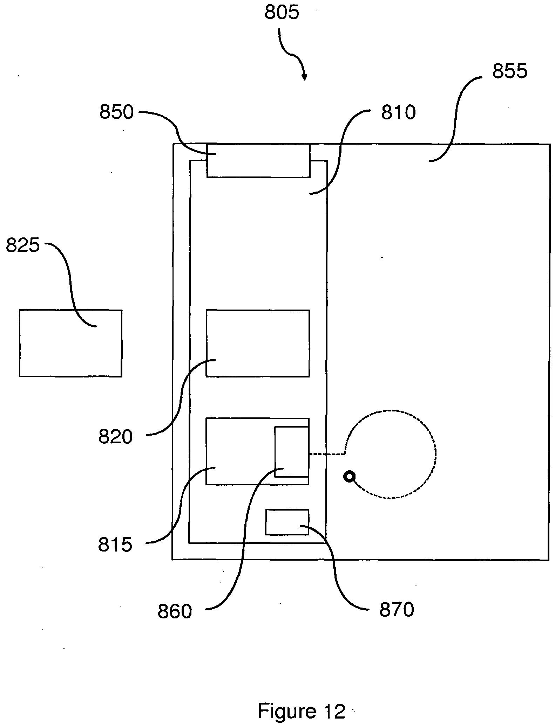

Comme illustré en figure 12, dans des modes de réalisation, le dispositif 805 objet de l'invention comporte un circuit électronique 810, qui comporte, dans le zone de couplage électromagnétique exclusive 855 :
- un circuit radioélectrique 815 émetteur/récepteur opérant dans une bande large de fréquences, qui réalise le moyen d'interfaçage radio UWB,
- un circuit de contrôle 820, qui réalise le moyen de reconnaissance de signature électronique.

Le circuit de contrôle 820 est connecté à un système maître 825, dans le cas où le dispositif 805 est utilisé comme un périphérique, comme illustré en figure 12. Dans le cas où le dispositif 805 réalise un équipement intégré autonome fournissant des fonctionnalités complémentaires, par exemple, une interface utilisateur, un écran, un écran tactile, une commande de gâche électrique, un clavier à code, un lecteur biométrique, etc..., le dispositif 805 comporte, en outre, un circuit applicatif 830, comme illustré en figure 14.

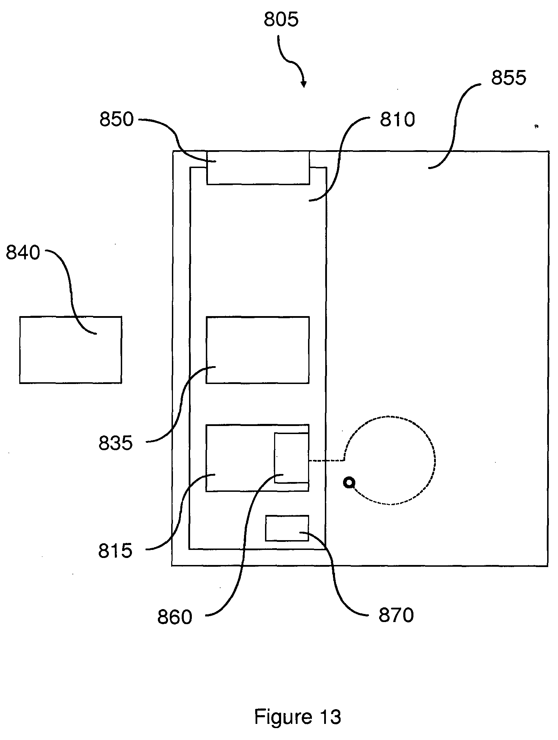

Comme illustré en figure 13, la fonction du circuit de contrôle 820 peut être partagée entre un dispositif de contrôle allégé 835 et un serveur central 840, dans le cadre d'une architecture centralisée. Par la suite, on entend par circuit de contrôle 820 à la fois le cas où la fonction du circuit de contrôle est intégrée et le cas où elle est partagée.

Le circuit de contrôle 820 a la charge de l'ensemble des traitements numériques et logiques du dispositif et, notamment, les traitements de la couche physique jusqu'à la couche Radio Resources (« RR » pour ressource radio) et Mobility Management (« MM » pour gestion de mobilité). Le circuit de contrôle 820 contrôle le circuit radioélectrique 815 et fournit le résultat de l'identification à un système maître 825 ou au circuit applicatif 830.

Le circuit radioélectrique 815 ne comprend pas d'antenne mais un sous-circuit 860 de couplage électromagnétique polarisé, la polarisation renforçant la zone de couverture exclusive. Ce renforcement signifie que la différence de niveau d'énergie électromagnétique, reçue au sein de la zone de couverture exclusive, entre l'énergie électromagnétique "émise" par le circuit radioélectrique 815 situé à l'intérieur de la zone de couverture exclusive et l'énergie électromagnétique issue de sources extérieures à cette zone de couverture exclusive est accrue de façon significative par ce sous-circuit 860 de couplage. Cette polarisation est alignée sur la polarisation prépondérante des téléphones mobiles, la polarisation "horizontale". Cette polarisation joue également un rôle positif dans l'efficacité du couplage électromagnétique et augmente d'autant la différence d'énergie électromagnétique reçue mentionnée ci-dessus.

On note que, en absence d'antenne, on ne peut pas parler d'émission radioélectrique de façon formelle dans la mesure où l'onde électromagnétique n'a pas la possibilité formelle de se former. En revanche, il peut y avoir une communication par couplage électromagnétique au sein de cette zone de couverture exclusive 855.

Dans la zone de couverture exclusive du circuit radioélectrique 815, la puissance du signal "émis" par le circuit radioélectrique 815 est, par définition et par construction, toujours plus grande que la puissance des signaux émis depuis l'extérieur de la zone de couverture exclusive.

Le circuit radioélectrique 815 génère un signal ultralarge dans la bande des 900 Mhz, conforme à la définition fixée par la décision de l'ARCEP 2007-683 et par la directive européenne 2009/343/CE.

Le circuit radioélectrique 815 génère ce signal ultralarge de sorte qu'à l'extérieur du boîtier du dispositif 805, le masque de puissance fixé par la décision de l'ARCEP 2007-683, modifiée par l'Annexe 7, et alignée sur la directive européenne 2009/343/CE est toujours respecté.

Ce signal ultralarge est construit de sorte qu'à l'intérieur de la zone de couverture exclusive, il peut être vu à travers différents filtres passe-bande appropriés comme une multitude de signaux modulés en fréquence (FSK), et qui peuvent donc être reçus et démodulés par un mobile conformant à la norme GSM et situé à l'intérieur de la zone de couverture exclusive et uniquement à l'intérieur de celle-ci.

Plus spécifiquement, ce signal ultralarge est construit de sorte qu'à l'intérieur de la zone de couverture exclusive, il peut être vu à travers différents filtres passe-bande appropriés comme une multitude de canaux balises GSM, majoritairement identiques. Par convention, dans le reste du document, il est fait référence à ces canaux balises GSM par le terme 'voie balise C0'.

Dans certains modes de réalisation, comme illustré en figure 14, le circuit radioélectrique 815 intègre un sous-circuit 865 de récepteur radioélectrique capable d'analyser l'environnement électromagnétique à l'extérieur de la zone de couverture exclusive grâce à une antenne 845 située à l'extérieur du blindage électromagnétique. Cette connaissance de l'environnement électromagnétique à l'extérieur de la zone de couverture exclusive sert à construire le signal ultralarge de sorte à minimiser toute interférence avec l'environnement électromagnétique à l'extérieur de la zone de couverture exclusive.

Le circuit électronique 810 comporte également un circuit 870 de lecture sans contact standard selon la norme RFID ISO14443 afin de pouvoir lire les tags standards RFID/NFC.

Le circuit électronique 810 comporte un circuit électromécanique 850, qui a pour fonction de :
a) Inviter l'usager à déposer ou insérer son téléphone mobile dans le dispositif 805 afin de pouvoir être identifié rapidement et bénéficier d'un service, étape 904,
b) Accueillir le téléphone mobile de l'usager, étape 906,
c) Détecter la présence du téléphone dans le dispositif 805, étape 908,
d) Isoler temporairement et électromagnétiquement le téléphone mobile en "enfermant" la totalité du téléphone, étape 912,
e) Informer l'usager de l'avancement du processus d'identification,
f) Informer l'usager du succès ou de l'échec de l'identification, étape 940,
g) Libérer, si nécessaire, le téléphone mobile de l'usager, étape 944 et
h) Informer l'usager de la possibilité de reprendre son téléphone mobile, étape 946.

Comme illustré en figures 6 à 11, des modes de réalisation comportent, comme moyens mécaniques, un boîtier en matériau conducteur avec un capot ou couvercle en matériau conducteur hermétique à ouverture/fermeture manuelle. Ce boîtier a un volume suffisant pour permettre à l'usager de déposer son téléphone mobile dans le boîtier, étape 906, et du reprendre avec aisance, étape 948. L'usager a la charge de fermer et d'ouvrir le couvercle.

Une forme de réalisation (non représentée) consiste en un support vertical en matériau conducteur légèrement incliné capable d'accueillir un téléphone portable en position verticale. Ce support est isolé par un demi-cylindre vertical en matériau conducteur tournant autour de l'axe central du support. La rotation du demi-cylindre est commandée par électronique et peut se baser sur des capteurs de mouvement et/ou de poids et/ou de présence. Par exemple, le boîtier du dispositif comporte un support adapté à accueillir un terminal mobile, dans une protection entourant au moins 440 degrés d'angle autour du téléphone portable et ouverte sur au moins trois côtés orthogonaux du terminal mobile.

Le circuit de contrôle 820 implémente notamment une émulation partielle d'une station de base GSM, mélangée avec une technologie relevant de la bande ultra-large (UWB), au cours des étapes 916 à 942.

Le circuit de contrôle 820, pour cette partie émulation de station de base, a plusieurs modes de fonctionnement dont un mode de veille et un mode actif.

Le circuit de contrôle 820 entre en mode de veille, étape 950
a) au démarrage du dispositif 805,
b) à la fin du mode actif ou
c) sur une information issue du circuit électromécanique 850, par exemple la détection d'une ouverture ou d'une détection d'absence de téléphone dans le boîtier, étape 948.

Le circuit de contrôle 820 sort du mode de veille pour entrer en mode actif, étape 910, sur une information issue du circuit électromécanique 850, par exemple une détection de présence du téléphone, étape 908, et éventuellement une détection de la fermeture du capot du boîtier.

En mode de veille, le circuit électromécanique 850 n'offre pas une isolation électromagnétique totale. En mode de veille, le circuit de contrôle 820 inhibe toute « émission » du circuit radioélectrique 815, étape 952.

En mode de veille, le circuit de contrôle 820 a la possibilité de commander au circuit radioélectrique 815 d'effectuer de façon périodique, étape 902, une identification des voies-balises GSM situées à l'extérieur de la zone de couverture exclusive grâce à l'antenne 845 située à l'extérieur du blindage électromagnétique. Le circuit de contrôle 820 a ainsi une connaissance de l'environnement électromagnétique à l'extérieur du dispositif 805.

En mode veille, le circuit de contrôle 820 commande les sous-circuits de notification visuelle et ou auditive situés dans le circuit électromécanique 850 afin de faire état de la disponibilité du dispositif 805 à accueillir un téléphone mobile ou un tag RFID/NFC, étape 904. En mode veille, le circuit de contrôle 820 notifie le circuit applicatif 830, dans le cas du dispositif 805 fonctionnant en tant qu'équipement intégré autonome, de la disponibilité du dispositif 805 à accueillir un téléphone mobile ou un tag RFID/NFC.

En mode actif, avant de réaliser une diffusion de signaux, le circuit de contrôle 820 ajuste le niveau d'énergie électromagnétique d'émission, étape 914, en tenant compte de l'effet d'isolation électromagnétique du circuit électromécanique 850, afin de minimiser le niveau d'énergie émise hors de la zone de couverture exclusive et afin de se conformer à la réglementation en vigueur.

En mode actif, le circuit de contrôle 820 commande la diffusion, d'un signal ultra-large généré par le circuit radioélectrique 815, étape 916. Ce signal ultra-large peut être vu à travers différents filtres passe-bande appropriés comme une multitude de canaux balises GSM, communément appelé C0, contenant un ensemble de combinaison de canaux logiques :
a) Une combinaison V : C0T0-V,
b) Optionnellement trois combinaisons VI : C0T2-VI, C0T4-VI et C0T6-VI et
c) Optionnellement quatre combinaisons VII : C0T1-VII, C0T3-VII, C0T5-VII et C0T7-VII.

On note que dans l'expression « CxTy-z », x désigne le numéro du canal physique ARFCN (Absolute Radio Frequency Channel Number), y désigne le timeslot (intervalle de temps), et z la combinaison de canaux logiques défini par la norme GSM.

De façon alternative, au cours de l'étape 916, ces canaux physiques contiennent un ensemble de combinaison de canaux logiques :
a) Une combinaison IV : C0T0-IV et
b) De une (minimum) à sept combinaisons VII : C0T1-VII, C0T2-VII, C0T3-VII, C0T4-VII C0T5-VII, C0T6-VII et C0T7-VII.

Pour rappel, la définition des combinaisons est la suivante :
a) Combination IV: FCCH + SCH + BCCH + CCCH,
b) Combination V: FCCH + SCH + BCCH + CCCH + 4 SDCCH + 2 SACCH ; [(5x1)+(5x1)+(1x4)+(3x4)+(4x4)+(2x4)+1 idle=51-frame multiframe]. Ne peut être qu'en C0T0,
c) Combinaison VI: BCCH + CCCH. Peut être utilisé en C0T2, C0T4 ou C0T6 et
d) Combination VII: 8 SDCCH + 4 SACCH.[(8x4)+(4x4)+3 idle=51-frame multiframe]. Peut être utilisé partout sauf en C0T0.

Préférentiellement, au cours de l'étape 916, le circuit radioélectrique 815 diffuse aussi, dans la zone de couverture exclusive, un signal ultralarge bande aléatoire à très faible puissance autour de 2100 Mhz de sorte à avoir un ratio Ec/No très faible dans la zone de couverture exclusive et à favoriser ainsi la transition d'un mobile dual-mode UMTS situé dans la zone de couverture exclusive vers le protocole GSM.

Comme indiqué précédemment, le signal ultralarge généré par le circuit radioélectrique 815, au cours de l'étape 916, peut être vu à travers différents filtres passe-bande appropriés comme une multitude de canaux-balises GSM. Cette multitude de voie-balises permet au téléphone de détecter rapidement, au cours d'une étape 918, une voie-balise dans la zone de couverture exclusive, et ce, peu importe l'algorithme de recherche de voie-balise propre à chaque téléphone. En effet, comme spécifié par la norme GSM, le terminal mobile surveille constamment les voies-balises présentes dans son environnement, en cherchant un « burst » FCH sur les canaux physiques selon une séquence spécifique à chaque mobile. De par l'extrême densité des voies-balises présentes dans la zone de couverture exclusive, le terminal mobile détecte immédiatement une voie-balise Cx.

Le canal logique BCCH utilise un code MCC-MNC égal à 001-01, défini habituellement pour le test et donc accepté par tous les mobiles. Ce code MCC-MNC est nécessairement différent et sans accord d'itinérance avec le code MCC-MNC précédemment utilisé par le terminal mobile avant son entrée dans la zone de couverture exclusive.

Le canal logique BCCH utilise une valeur LAC arbitrairement défini à 0.

Le canal logique BCCH utilise une valeur CELL_BAR_ACCESS égale à 0 et une valeur CELL_BAR_QUALIFY égale à 0. Cela attribue une priorité « normale » sur la « cellule ».

Le canal logique BCCH utilise une valeur MS-TXPWR-MAX-CCH égale au maximum spécifié.

Les canaux CCCH sont tous utilisés en tant que AGCH en mode diffusion.

Ces valeurs MCC/MNC/LAC/ CELL_BAR_ACCESS/ CELL_BAR_QUALIFY ont pour effet de forcer immédiatement le terminal mobile situé dans la zone de couverture exclusive à initier une procédure de « Location Update Request », au cours d'une étape 920. Le terminal mobile décode l'information SCH (et notamment la base de temps FN) puis BCCH contenues dans la voie-balise Cx. Le terminal mobile décode un code MCC-MNC égal à 001-01. Ce code MCC-MNC de test, accepté par tous les mobiles, a pour conséquence que le terminal mobile initie immédiatement une procédure « Location Update Request ». Pour ce faire, le terminal mobile effectue d'abord, au cours de l'étape 922, une demande de canal de contrôle dédié SDCCH sur lequel il fera ensuite la requête « Location Update », au cours de l'étape 928). Cette demande de canal SDCCH s'effectue par l'envoi d'un burst de type RACH sur le canal physique Cx.

Ainsi le terminal mobile émet, au cours d'une étape 922, un burst RACH avec une Reference Request composée d'un nombre RA aléatoire entre 0 et 31 et du numéro de trame FN=z, instant à laquelle le burst RACH est envoyé.

Le terminal mobile envoie donc à un instant FN=z un burst RACH avec une valeur RA=y aléatoire et une RR=z. 0 ≤ y < 32 car la demande est motivée par une « Location Update Request » ; FN=Frame Number, RR=Reference Request, RA=Random.

Une fois le RACH envoyé, le terminal mobile se met en écoute sur les canaux logiques AGCH sur le canal physique Cx à la recherche d'une réponse avec (RA=y, RR=z) correspondant à sa demande.

On note que, dans les faits, ce burst RACH envoyé par le terminal mobile est totalement ignoré par le dispositif 805 car le dispositif 805 n'écoute que sur le canal C0.

Le circuit radioélectrique 815 intègre un sous-circuit (non représenté) de détecteur de signal dans la bande d'émission du mobile, avec un seuil de détection inférieur à la valeur MS-TXPWR-MAX-CCH du niveau d'émission pour un burst RACH diffusé sur le canal BCCH. Ainsi le circuit est capable de détecter et de dater avec précision par un numéro de FN=z' l'envoi des bursts RACH par le terminal mobile dans la zone de couverture exclusive, au cours d'une étape 924.

Ainsi le dispositif 805 peut détecter l'émission du burst RACH et dater son émission FN=z' avec une précision temporelle suffisante (de sorte que z'=z ou z'=z+1).

Dès la détection du burst RACH, le système radioélectrique 815 émet, au cours d'une étape 926, sur l'ensemble des canaux AGCH une série de 64 messages « Immediate Assignment » dont le but est d'assigner un canal SDCCH sur le canal physique C0. Ces 64 messages couvrent l'ensemble des valeurs du couplet (RA,RR) avec RA variant de 0 à 31 et avec RR=z'-1 et RR=z'. La précision de la détection et donc la précision de z' permet d'assurer que z=z' ou z=z'-1.

Un de ces 64 messages « Immediate Assignment » a donc un couplet (RA,RR) correspondant à la demande RACH envoyé par le terminal mobile. Le terminal mobile prend donc ce message comme réponse formelle à sa demande RACH de canal SDCCH (le message Immediate Assignment avec RA=y et RR=z).

Dès la réception de ce message d'Immediate Assignment, le terminal mobile se met sur le canal C0 sur le canal SDDCH qui lui a été assigné dans le message Immediate Assignment spécifié, au cours d'une étape 928, et émet dès lors un message de Location Update Request sur le canal logique SDCCH qui lui a été assigné.

On note que l'étape 920 note le début de la procédure Location Update request. Cette procédure se concrétise en partie au cours de l'étape 928 avec l'envoie du message « Location Update Request » par le terminal mobile.

Parallèlement, au cours de l'étape 928, le circuit de contrôle 820 est configuré pour demander en retour sur le même canal SDCCH un message « Identity Request » de type IMEI.

Le terminal mobile répond sur ce même canal SDCCH avec un message « Identity Respohse » avec la valeur IMEI du mobile, au cours d'une étape 930.

Au cours d'une étape 932, le circuit de contrôle 820 est adapté pour encrypter la valeur IMEI reçue selon une méthode de chiffrement (encryption) de type SHA1 et envoyer la signature digitale unique du mobile ainsi obtenue au circuit applicatif 830 ou au système maître 825.

On note que le fait que le moyen de reconnaissance est adapté à reconnaître une signature numérique unique du terminal mobile indépendante de la carte d'identification de souscripteur ou des données contenues dans ladite carte, n'est pas contradictoire avec une reconnaissance d'une signature numérique unique du terminal mobile mettant en oeuvre une simulation de connexion du terminal mobile à une station de base d'un réseau de télécommunication cellulaire.

En effet, l'IMEI est un numéro d'identifiant uniquement du terminal mobile communicant. Ce numéro est codé et stocké dans le terminal mobile et non dans la carte SIM. Ce numéro n'est pas, au sens propre, confidentiel. Par exemple, il peut être lu sur n'importe quel téléphone en tapant la séquence clavier '*#06#' (étoile, dièse, zéro, six, dièse).

La carte SIM contient, quant à elle, d'autres informations directement liés à l'abonnement, par le porteur de la carte SIM, par exemple à des services de communications cellulaires. Ces informations strictement confidentielles sont par exemple l'IMSI (l'identifiant unique de l'abonné mobile international, ou International Mobile Subscriber Identity), ou encore des clés de chiffrement (encryption) Ki et Kc spécifiques et propriétés du fournisseur de services de communications cellulaires.

Au cours d'une étape 934, le dispositif ou le serveur associé effectue l'identification du téléphone mobile et recherche des données relative à l'utilisateur de ce téléphone mobile par exemple un nombre de points de carte de fidélité, des promotions à lui communiquer, ...

Le circuit de contrôle 820 envoie sur le même canal SDCCH un message « Location Update Accept » au cours d'une étape 936.

Le système maître 825, ou le circuit applicatif 830, a la possibilité à ce moment de la procédure d'identification de commander au circuit de contrôle 820 d'envoyer sur le même canal SDCCH un minimessage (SMS) personnalisé au mobile, au cours d'une étape 938.

Le système maître 825, ou le circuit applicatif 830, au cours d'une étape 938, est adapté à envoyer sur ce même canal SDCCH un minimessage (SMS) spécial au mobile situé dans la zone de couverture exclusive, de nature à démarrer, ou lancer, sur ledit mobile une application logicielle, préalablement installée sur ledit mobile, sans utilisation du numéro de téléphone du terminal mobile communicant.

Selon des caractéristiques particulières, cette application logicielle est adaptée à être démarrée automatiquement sur la réception dudit minimessage (SMS) spécial.

Le circuit de contrôle 820 envoie un message de « Channel release », au cours d'une étape 942, afin de libérer le canal et la ressource radio.

Le dispositif 805 quitte alors le mode actif et entre en mode veille au cours de l'étape 950.

Comme on le comprend à la description qui précède, le dispositif permet avec une grande certitude de déclencher et de finir le processus de "camp" (ou d'enregistrement au réseau) et d'obtenir l'identification IMEI du téléphone en un temps minimum de quelques secondes, et ce, avec n'importe quel téléphone, de n'importe quel opérateur

Par ailleurs, ce dispositif permet également aux fournisseurs de produits ou de services de diffuser aux porteurs de mobile lors de l'identification en envoyant des SMS personnalisés directement sur leur mobile, et ce, sans devoir connaître leur numéro de mobile. Par exemple, lors de l'identification du client en caisse ou à l'entrée du magasin (et uniquement lors de cette phase d'identification), le marchand peut envoyer, par SMS au client, son solde de points de fidélité, des coupons de réductions personnalisés etc... Cette diffusion de SMS lors de la phase d'identification ne requiert pas que le consommateur divulgue son numéro de mobile au marchand, préservant ainsi une donnée personnelle devenue de plus en plus sensible.

Par ailleurs, ce dispositif permet également aux fournisseurs de produits ou de services, lors de l'identification et uniquement lors de cette identification du mobile dans le dispositif 805 objet de l'invention, de démarrer automatiquement leur application logicielle préalablement installée sur les mobiles des clients, et ce, sans devoir connaître leur numéro de mobile.

Le dispositif 805 sort du mode actif pour entrer en mode de veille lorsque le circuit de contrôle 820 a envoyé un message de « Channel Release » sur le canal SDCCH assigné sur le canal physique C0.

En plus de l'identification du terminal mobile et donc de son utilisateur, le dispositif objet de l'invention permet aux fournisseurs de produits ou de services de diffuser aux porteurs de mobile, lors de la procédure d'identification dans le dispositif 805, des SMS personnalisés directement sur leur mobile, et ce, sans devoir connaître leur numéro de mobile. Par exemple, lors de l'identification du client en caisse ou à l'entrée du magasin (et uniquement lors de cette phase d'identification dans le dispositif 805), le marchand peut envoyer par SMS au client son solde de points de fidélité, des coupons de réductions personnalisés etc... Cette diffusion de SMS lors de la phase d'identification ne requiert pas que le consommateur communique son numéro de mobile au marchand, préservant ainsi une donnée personnelle devenue de plus en plus sensible. Le client peut ainsi bénéficier d'informations commerciales personnalisées et pertinentes lors de son identification (nécessairement volontaire puisqu'il doit insérer son mobile dans le dispositif 805) sans avoir à communiquer des données personnelles sensibles comme son numéro de mobile.

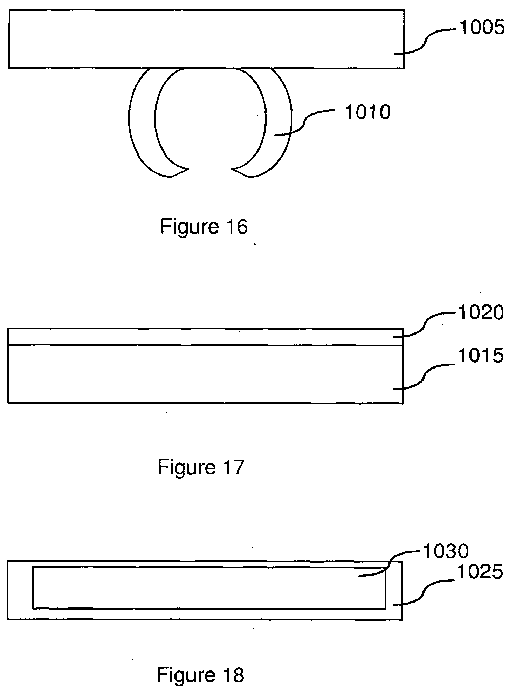

On observe, en figure 16, un dispositif objet de la présente invention, qui comporte un boîtier 1005, tel que présenté précédemment et un moyen d'attache 1010 à un chariot de supermarché. Ce mode de réalisation a l'avantage de permettre à l'utilisateur d'avoir, en permanence le contenu de sa carte de fidélité sous les yeux, sans avoir à garder le dispositif à la main.

Préférentiellement, dans ce mode de réalisation, on prévoit une géolocalisation, par exemple par triangulation réalisée par le boîtier 1005, sur la base des positions de stations de base d'un réseau de téléphonie mobile. A cet effet, le boîtier 1005 met en oeuvre la base de temps précise décrite ci-dessus et l'antenne externe 130, qui dialogue de façon continue avec des bornes-balises. Ces bornes-balises sont préférentiellement adaptées dans la bande de fréquence ISM. Par exemple, les bornes-balises seront basées sur une version simplifiée du circuit 115. Une localisation dans un magasin à deux mètres près est ainsi possible, ce qui permet l'affichage de promotions immédiatement accessibles par l'utilisateur à portée de main.

On observe, en figure 17, un dispositif objet de la présente invention qui comporte un boîtier 1015 muni d'un capot 1020 constitué d'une tablette informatique. Préférentiellement, cette tablette est durcie. Ce mode de réalisation a l'avantage de fournir une interface utilisateur riche à l'utilisateur. Par exemple, la tablette 1020 est connectée à un système informatique du supermarché par un réseau local sans fil, par exemple utilisant une communication WiFi. Le terminal mobile est alors utilisé pour s'identifier au niveau de la tablette 1020.

On observe, en figure 18, un dispositif objet de la présente invention qui comporte un boîtier 1025 associé à un lecteur de codes à barres 1030. Ce mode de réalisation a l'avantage de permettre à l'utilisateur d'identifier un produit par lecture de son code à barres et d'obtenir immédiatement une information riche relative à ce produit.

On note que, dans d'autres modes de réalisation, non représentés, le capot d'accès à l'intérieur du boîtier est frontal.

## Revendications

1. Dispositif (100, 300, 400, 500, 600, 700, 805) d'identification de terminal mobile communicant (155, 305), comportant :
- un moyen (320, 325, 420, 425, 620, 625, 815, 860) de couplage électromagnétique définissant une zone de couplage électromagnétique exclusive (855) entre le dispositif et le terminal mobile communicant,
- un moyen (815) d'interfaçage radio à bande ultralarge simulant la disponibilité pour communiquer avec le terminal mobile d'au moins une station de base d'un réseau de télécommunication et
- un moyen (820) de reconnaissance d'une signature numérique unique du terminal mobile communicant mettant en oeuvre des échantillons d'une trace électromagnétique d'un message envoyé par le terminal mobile pour tenter de se connecter à une station de base simulée.

2. Dispositif selon la revendication 1, dans lequel le moyen (820) de reconnaissance est adapté à reconnaître une signature numérique unique du terminal mobile communicant (155, 305) indépendante de la carte d'identification de souscripteur ou des données contenues dans ladite carte.

3. Dispositif selon l'une des revendications 1 à 2, dans lequel le moyen (320, 325, 420, 425, 620, 625, 815, 860) de couplage électromagnétique comporte un boîtier (325, 425, 625) d'atténuation de rayonnements électromagnétiques, le moyen (820) d'interfaçage radio communicant avec le terminal mobile communicant (305), lorsque le terminal mobile communicant se trouve dans ledit boîtier.

4. Dispositif selon l'une des revendications 1 à 3, qui comporte, en outre, un moyen (820, 825, 830) de transmission de minimessages audit terminal mobile communicant sans utilisation du numéro de téléphone du terminal mobile communicant.

5. Dispositif selon l'une des revendications 1 à 4, qui comporte, en outre, un moyen (820, 825, 830) de lancer une application logicielle, préalablement installée sur ledit terminal mobile communicant sans utilisation du numéro de téléphone du terminal mobile communicant.

6. Dispositif selon l'une des revendications 1 à 5, dans lequel la plus grande dimension de la zone de couplage électromagnétique exclusive est inférieure à la moitié de la longueur d'onde des signaux électromagnétiques mis en oeuvre par le moyen d'interfaçage radio.

7. Dispositif selon l'une des revendications 1 à 6, qui comporte, en outre :
- un moyen de réception d'un signal d'horloge de référence d'un réseau de téléphonie cellulaire et
- un moyen d'émission d'un signal électromagnétique à l'intérieur de la zone de couplage électromagnétique exclusive, ledit signal étant synchronisé avec ladite horloge de référence reçue.

8. Dispositif selon l'une des revendications 1 à 7, dans lequel le moyen d'interfaçage est configuré pour émettre simultanément des signaux ayant des porteuses simulant une pluralité de stations de base.

9. Dispositif selon l'une des revendications 1 à 8, qui comporte, en outre :
- un moyen d'allocation d'un canal de communication au terminal mobile,
- un moyen de réception, sur le canal alloué, d'un message représentatif d'une demande de mise à jour de positionnement (« location update ») du terminal mobile, ladite demande étant représentative d'au moins un identifiant du terminal mobile et
- un moyen de prélèvement d'échantillons du signal de demande de mise à jour de positionnement; pour définir une signature du terminal mobile.

10. Dispositif selon la revendication 9, qui comporte un moyen d'émission d'un message sur ledit canal de communication, pour provoquer la mémorisation d'une information dans le terminal mobile.

11. Dispositif selon la revendication 10, dans lequel le message émis par le moyen d'émission d'un message sur ledit canal comporte une instruction de lancement d'une application chargée sur le terminal mobile.

12. Dispositif selon l'une des revendications 10 à 11, dans lequel le moyen d'émission d'un message sur ledit canal de communication est configuré pour que ledit message prenne la forme d'un message court (« SMS »).

13. Dispositif selon l'une des revendications 9 à 12, dans lequel le moyen de prélèvement d'échantillons est configuré pour prélever des échantillons représentatifs de la demande de mise à jour de positionnement, à des instants prédéterminés auquel ladite demande de mise à jour de positionnement représente un identifiant du terminal mobile.

14. Dispositif selon l'une des revendications 1 à 13, qui comporte :
- un moyen d'allocation d'un canal de communication au terminal mobile et
- un moyen d'émission d'un message sur ledit canal sans décodage de message de mise à jour de positionnement émis par le terminal mobile.

15. Procédé d'identification d'un terminal mobile communicant, comportant :
- une étape (910, 912) de couplage électromagnétique dans une zone de couplage électromagnétique exclusive entre le dispositif et le terminal mobile communicant,
- une étape (914, 916) d'interfaçage radio à bande ultralarge simulant la disponibilité pour communiquer avec le terminal mobile d'au moins une station de base d'un réseau de télécommunication et
- une étape (918 à 936) de reconnaissance d'une signature numérique unique du terminal mobile communicant mettant en oeuvre des échantillons d'une trace électromagnétique d'un message envoyé par le terminal mobile pour tenter de se connecter à une station de base simulée.

## Patentansprüche

1. Vorrichtung (100, 300, 400, 500, 600, 700, 805) zur Erkennung eines kommunizierenden mobilen Endgeräts (155, 305), umfassend:
- ein Mittel (320, 325, 420, 425, 620, 625, 815, 860) zur elektromagnetischen Kopplung, das eine exklusive elektromagnetische Kopplungszone (855) zwischen der Vorrichtung und dem kommunizierenden mobilen Endgerät definiert,
- ein Mittel (815) zur Herstellung einer Ultrabreitband-Funkschnittstelle, die die Verfügbarkeit mindestens einer Basisstation eines Telekommunikationsnetzes, um mit dem mobilen Endgerät zu kommunizieren, simuliert, und
- ein Mittel (820) zur Erkennung einer einzigartigen digitalen Signatur des kommunizierenden mobilen Endgeräts, das Stichproben einer elektromagnetischen Spur einer von dem mobilen Endgerät gesandten Nachricht einsetzt, um zu versuchen, sich an eine simulierte Basisstation anzuschließen.

2. Vorrichtung nach Anspruch 1, bei der das Erkennungsmittel (820) dazu vorgesehen ist, eine einzigartige digitale Signatur des kommunizierenden mobilen Endgeräts (155, 305), die von der Identifikationskarte eines Unterzeichnenden oder in der Karte enthaltenen Daten unabhängig ist, zu erkennen.

3. Vorrichtung nach einem der Ansprüche 1 bis 2, bei der das Mittel (320, 325, 420, 425, 620, 625, 815, 860) zur elektromagnetischen Kopplung ein Gehäuse (325, 425, 625) zur Dämpfung der elektromagnetischen Strahlungen umfasst, wobei das Mittel (820) zur Herstellung einer Funkschnittstelle mit dem kommunizierenden mobilen Endgerät (305) kommuniziert, wenn sich das kommunizierende mobile Endgerät in dem Gehäuse befindet.

4. Vorrichtung nach einem der Ansprüche 1 bis 3, die ferner ein Mittel (820, 825, 830) zur Übertragung von Mini-Nachrichten an das kommunizierende mobile Endgerät ohne Verwendung der Telefonnummer des kommunizierenden mobilen Endgeräts umfasst.

5. Vorrichtung nach einem der Ansprüche 1 bis 4, die ferner ein Mittel (820, 825, 830) zum Starten einer Software-Anwendung, die vorher auf dem kommunizierenden mobilen Endgerät installiert wurde, ohne Verwendung der Telefonnummer des kommunizierenden mobilen Endgeräts umfasst.

6. Vorrichtung nach einem der Ansprüche 1 bis 5, bei der die größte Dimension der exklusiven elektromagnetischen Kopplungszone kleiner als die Hälfte der Wellenlänge der elektromagnetischen Signale, die von dem Mittel zur Herstellung einer Funkschnittstelle eingesetzt werden, ist.

7. Vorrichtung nach einem der Ansprüche 1 bis 6, ferner umfassend:
- ein Mittel für den Empfang eines Referenzzeitsignals eines Mobilfunknetzes, und
- ein Mittel zum Senden eines elektromagnetischen Signals innerhalb der exklusiven elektromagnetischen Kopplungszone, wobei das Signal mit der empfangenen Referenzzeit synchronisiert ist.

8. Vorrichtung nach einem der Ansprüche 1 bis 7, bei dem das Mittel zur Herstellung einer Schnittstelle derart konfiguriert ist, dass es gleichzeitig Signale entsendet, die Trägerfrequenzen haben, die eine Vielzahl von Basisstationen simulieren.

9. Vorrichtung nach einem der Ansprüche 1 bis 8, die ferner umfasst:
- ein Mittel zur Zuteilung eines Kommunikationskanals an das mobile Endgerät;
- ein Mittel für dem Empfang einer Nachricht auf dem zugeteilten Kanal, die für eine Anfrage nach Aktualisierung der Positionierung ("location update") des mobilen Endgeräts repräsentativ ist, wobei die Anfrage für mindestens einen Identifikator des mobilen Endgeräts repräsentativ ist,
- ein Mittel zur Entnahme von Stichproben des Signals zur Anfrage nach Aktualisierung der Positionierung, um eine Signatur des mobilen Endgeräts zu definieren.

10. Vorrichtung nach Anspruch 9, die ein Mittel zum Senden einer Nachricht auf dem Kommunikationskanal umfasst, um die Speicherung einer Information in dem mobilen Endgerät hervorzurufen.

11. Vorrichtung nach Anspruch 10, bei dem die von dem Mittel zum Senden einer Nachricht auf dem Kanal gesandte Nachricht einen Befehl zum Starten einer auf das mobile Endgerät geladenen Anwendung umfasst.

12. Vorrichtung nach einem der Ansprüche 10 bis 11, bei der das Mittel zum Senden einer Nachricht auf dem Kommunikationskanal derart konfiguriert ist, dass die Nachricht die Form einer Kurznachricht ("SMS") annimmt.

13. Vorrichtung nach einem der Ansprüche 9 bis 12, bei der das Mittel zur Entnahme von Stichproben derart konfiguriert ist, dass es Stichproben entnimmt, die für die Anfrage nach Aktualisierung der Positionierung repräsentativ sind, zu vorbestimmten Zeitpunkten, zu denen die Anfrage nach Aktualisierung der Positionierung einen Identifikator des mobilen Endgeräts repräsentiert.

14. Vorrichtung nach einem der Ansprüche 1 bis 13, umfassend:
- ein Mittel zur Zuteilung eines Kommunikationskanals an das mobile Endgerät, und
- ein Mittel zum Senden einer Nachricht auf dem Kanal ohne Decodierung einer Nachricht zur Aktualisierung der Positionierung, die von dem mobilen Endgerät entsandt wird.

15. Verfahren zur Erkennung eines kommunizierenden mobilen Endgeräts, umfassend:
- einen Schritt (910, 912) zur elektromagnetischen Kopplung in einer exklusiven elektromagnetischen Kopplungszone zwischen der Vorrichtung und dem kommunizierenden mobilen Endgerät,
- einen Schritt (914, 916) zur Herstellung einer Ultrabreitband-Funkschnittstelle, die die Verfügbarkeit mindestens einer Basisstation eines Telekommunikationsnetzes, um mit dem mobilen Endgerät zu kommunizieren, simuliert, und
- einen Schritt (918 bis 936) zur Erkennung einer einzigartigen digitalen Signatur des kommunizierenden mobilen Endgeräts, der Stichproben einer elektromagnetischen Spur einer von dem mobilen Endgerät gesandten Nachricht einsetzt, um zu versuchen, sich an eine simulierte Basisstation anzuschließen.

## Claims

1. A device (100, 300, 400, 500, 600, 700, 805) for identifying a communicating mobile terminal (155, 305), comprising:
- an electromagnetic coupling means (320, 325, 420, 425, 620, 625, 815, 860) defining an exclusive zone of electromagnetic coupling (855) between the device and the communicating mobile terminal,
- an ultra-wide-band radio interfacing means (815) simulating the availability to communicate with the mobile terminal of at least one base station of a telecommunication network and
- a means (820) for recognizing a unique digital signature of the communicating mobile terminal implementing samples of an electromagnetic trace of a message dispatched by the mobile terminal so as to attempt to connect to a simulated base station.

2. The device as claimed in claim 1, in which the recognition means (820) is suitable for recognizing a unique digital signature of the communicating mobile terminal (155, 305) which is independent of the subscriber identification card or of the data contained in said card.

3. The device as claimed in one of claims 1 to 2, in which the electromagnetic coupling means (320, 325, 420, 425, 620, 625, 815, 860) comprises a box (325, 425, 625) for attenuating electromagnetic radiations, the radio interfacing means (820) communicating with the communicating mobile terminal (305), when the communicating mobile terminal is situated in said box.

4. The device as claimed in one of claims 1 to 3, which comprises, furthermore, a means (820, 825, 830) for transmitting minimessages to said communicating mobile terminal without using the telephone number of the communicating mobile terminal.

5. The device as claimed in one of claims 1 to 4, which comprises, furthermore, a means (820, 825, 830) to launch a software application previously installed on said communicating mobile terminal without using the telephone number of the communicating mobile terminal.

6. The device as claimed in one of claims 1 to 5, in which the largest dimension of the exclusive electromagnetic coupling zone is less than half the wavelength of the electromagnetic signals implemented by the radio interfacing means.

7. The device as claimed in one of claims 1 to 6, which comprises, furthermore:
- a means for receiving a reference clock signal from a cellular telephone network and
- a means for emitting an electromagnetic signal inside the exclusive electromagnetic coupling zone, said signal being synchronized with said reference clock received.

8. The device as claimed in one of claims 1 to 7, in which the interfacing means is configured to simultaneously emit signals having carriers simulating a plurality of base stations.

9. The device as claimed in one of claims 1 to 8, which comprises, furthermore:
- a means for allocating a communication channel to the mobile terminal,
- a means for receiving, on the allocated channel, a message representative of a positioning update request ("location update") in respect of the mobile terminal, said request being representative of at least one identifier of the mobile terminal and
- a means for extracting samples of the positioning update request signal, so as to define a signature of the mobile terminal.

10. The device as claimed in claim 9, which comprises a means for emitting a message on said communication channel, so as to cause an item of information to be stored in the mobile terminal.

11. The device as claimed in claim 10, in which the message emitted by the means for emitting a message on said channel comprises an instruction to launch an application loaded on the mobile terminal.

12. The device as claimed in one of claims 10 to 11, in which the means for emitting a message on said communication channel is configured so that said message takes the form of a short message ("SMS").

13. The device as claimed in one of claims 9 to 12, in which the means for extracting samples is configured to extract samples representative of the positioning update request, at predetermined instants at which said positioning update request represents an identifier of the mobile terminal.

14. The device as claimed in one of claims 1 to 13, which comprises:
- a means for allocating a communication channel to the mobile terminal and
- a means for emitting a message on said channel without decoding any positioning update message emitted by the mobile terminal.

15. A method for identifying a communicating mobile terminal, comprising:
- a step (910, 912) of electromagnetic coupling in an exclusive zone of electromagnetic coupling between the device and the communicating mobile terminal,
- a step (914, 916) of ultra-wide-band radio interfacing simulating the availability to communicate with the mobile terminal of at least one base station of a telecommunication network and
- a step (918 to 936) of recognizing a unique digital signature of the communicating mobile terminal implementing samples of an electromagnetic trace of a message dispatched by the mobile terminal so as to attempt to connect to a simulated base station.
